Europäisches Patentamt

European Patent Office

Office européen des brevets

(19)

(11) Veröffentlichungsnummer: **0 093 737**
**B1**

(12) # EUROPÄISCHE PATENTSCHRIFT

(45) Veröffentlichungstag der Patentschrift:
**05.11.86**

(51) Int. Cl.⁴: **F 16 L 59/06**

(21) Anmeldenummer: **82903289.5**

(22) Anmeldetag: **16.11.82**

(86) Internationale Anmeldenummer:
**PCT/AT 82/00032**

(87) Internationale Veröffentlichungsnummer:
**WO 83/01824 (26.05.83 Gazette 83/13)**

(54) ROHRLEITUNGSSYSTEM, INSBESONDERE MEHRKANALROHRLEITUNGSSYSTEM.

(30) Priorität: **16.11.81 AT 4926/81**

(43) Veröffentlichungstag der Anmeldung:
**16.11.83 Patentblatt 83/46**

(45) Bekanntmachung des Hinweises auf die Patenterteilung:
**05.11.86 Patentblatt 86/45**

(84) Benannte Vertragsstaaten:
**AT BE DE FR SE**

(56) Entgegenhaltungen:
**DE-B-1 284 745**
**GB-A-404 644**
**GB-A-1 505 578**
**US-A-2 482 878**
**US-A-3 677 303**

(73) Patentinhaber: **TAUSCHMANN, Otto,
Ostmarkgasse 23/9, A-1210 Wien (AT)**

(72) Erfinder: **TAUSCHMANN, Otto, Ostmarkgasse 23/9,
A-1210 Wien (AT)**

(74) Vertreter: **Beer, Manfred, Dipl.- Ing.,
Patentanwälte Dipl.- Ing. Otto Beer, Dipl.- Ing.
Manfred Beer Lindengasse 8, A-1070 Wien (AT)**

EP 0 093 737 B1

**Beschreibung**

Die Erfindung betrifft ein Rohrleitungssystem, insbesondere Mehrkanalrohrleitungssystem, zum Transport von mindestens einem flüssigen und/oder gasförmigen Medium bzw. Suspensionen, beispielsweise eine Fernheizleitung, Kühlmittelleitung, Erdöl- bzw. Erdgasleitung. Das Rohrleitungssystem weist ein Außenrohr, mindestens ein Innenrohr und gegebenenfalls zusätzlich innerhalb des Außenrohres angeordnete Rohre, beispielsweise Be- und Entlüftungsrohre auf; das Außenrohr und das bzw. die Innenrohre können aus Faserbzw. Asbestzement, Kunstharzbeton oder Kunststoff bestehen. In dem Innenrohr ist ein aus Metall oder Kunststoff bestehendes Mediumrohr unter Freilassung eines Luftspaltes zwischen dem Innenrohr und dem Mediumrohr mittels Gleitstücken in axialer Richtung verschiebbar gelagert. Der Hohlraum zwischen dem Außenrohr und dem Innenrohr bzw. den Innenrohren sowie gegebenenfalls den zusätzlichen Rohren (Be- und Entlüftungsrohren) ist mit elastischem Kunststoffschaum, vorzugsweise Polyurethanschaum ausgeschäumt, so daß das bzw. die im Außenrohr angeordneten Rohre mittels dieses Kunststoffschaumkörpers im Abstand voneinander gehalten und wärmebrückenfrei angeordnet ist bzw. sind.

Ein derartiges Rohrleitungssystem ist in der GB-A-1 505 578 beschrieben. Bei diesem Rohrleitungssystem sind die Stoßstellen zwischen den einzelnen Schüssen der die durchlaufenden Mediumrohre umgebenden Rohranordnung, bestehend aus Innenrohr, Kunststoffschaumkörper und Außenrohr, wie folgt ausgebildet:

Das längere Innenrohr steht mit seinen Enden über die Enden des Außenrohres und des Kunststoffschaumkörpers vor; die Enden der aneinander anstoßenden Innenrohre sind über ein Muffenstück verbunden; der zwischen den Enden der benachbarten Außenrohre samt Kunststoffschaumkörper verbleibende freiraum wird nach Herstellen der Verbindung zwischen den Mediumrohren sowie zwischen den Innenrohren mit einem Kunststoffschaum gefüllt; über die gesamte Anordnung werden dann außen an jeder Stoßstelle zwei PVC-Manschetten heiß aufgeschrumpft, nachdem über die Enden der Außenrohre Dichtungsstreifen gelegt worden sind. Diese Ausbildung der Stoßstellen der die Mediumrohre umhüllenden Rohranordnung ist aufwendig und die Dichtheit im Bereich der Kunststoffschaumkörper ist dabei nicht gewährleistet. Die aus Außenrohr, Kunststoffschaumkörper und Innenrohr bestehenden Schüsse der das Mediumrohr umgebenden Rohranordnung sind auf dem Mediumrohr mittels Führungsstücken axial verschiebbar gelagert, die aus über das Mediumrohr in Abständen festgeklemmten Bunden bestehen. Die Bunde tragen Rollen, welche an der Innenfläche des Innenrohres der das Mediumrohr umgebenden Rohranordnung ablaufen können. Diese Führung ist nicht nur aufwendig, sondern die Rollen stellen außerdem Punktabstützungen dar, die zur Vermeidung von Beschädigungen beim Aufschieben der das Mediumrohr umgebenden Rohranordnung auf das verlegte Mediumrohr große Sorgfalt verlangen.

Das Problem der Stoßstellen der einzelnen Schüsse der das Mediumrohr umgebenden Rohranordnung ist auch bei dem aus der US-A-3 677 303 bekannten Rohrleitungssystem unbefriedigend gelöst. Auch hierbei verbleiben freie Zwischenräume zwischen benachbarten, aus konzentrischen Rohren und Kunststoffschaum bestehenden Schüssen der das Mediumrohr umgebenden Rohranordnung; eine Dichtmanschette verbindet die im Abstand befindlichen Schüsse und der Freiraum innerhalb der Dichtmanschette wird nach Fertigstellung der Rohrleitung mit Kunststoffschaum ausgeschäumt. Dafür ist ein eigener Arbeitsgang erforderlich und die Qualität der Verbindung ist nach der Fertigstellung nicht kontrollierbar. Die aus konzentrischen Rohren, einer Verstärkung und Kunststoffschaum bestehenden Schüsse der das Mediumrohr umgebenden Rohranordnung sind auf dem Mediumrohr mittels Zwischenringen gelagert, die nur schwer ein axiales Verschieben der Schüsse zulassen und Wärmebrücken darstellen.

Der Erfindung liegt die Aufgabe zugrunde, ein Rohrleitungssystem, insbesondere ein Mehrkanalrohrleitungssystem, ohne die erwähnten Nachteile bereitzustellen, welches mit geringerem Aufwand und größerer Sicherheit der Qualität der Ausfürung insbesondere an den Stoßstellen der das oder die Mediumrohre umgebenden Rohranordnung verlegt werden kann und Wärmeverluste verhindert.

Die Erfindung besteht bei einem Rohrleitungssystem nach dem Oberbegriff des Patentanspruches 1 in den Merkmalen von dessen kennzeichnendem Teil. Dadurch daß der Kunststoffschaumkörper an mindestens einem der zu verbindenden Schüsse der das Mediumrohr bzw. die Mediumrohre umgebenden Rohranordnung über die Enden des Außenrohrs und des bzw. der Innenrohre vorsteht, ergibt sich ein vollflächiges Anliegen der aneinander anschließenden Kunststoffschaumkörper. Die Qualität und Dichtheit dieser Verbindung ist gewährleistet und jederzeit kontrollierbar und es ist kein weiterer Arbeitsgang erforderlich, wie dieser bei bekannten Rohrleitungssystemen in Form des Ausschäumens des zwischen den Kunststoffschaumkörpern frei bleibenden Zwischenraumes unentbehrlich ist.

Für das vollflächige Anliegen der aneinander anschließenden Kunststoffschaumkörper müssen sich lediglich die Schüsse der das Mediumrohr bzw. die Mediumrohre umgebenden Rohranordnung auf dem bzw. den Mediumrohren gut verschieben lassen. Die das Verschieben ermöglichenden Führungsstücke sind vorteilhaft als am äußeren Umfang des Mediumrohres mittels eines Spanngliedes, z.B. Spannbandes, kraft- bzw. reibungsschlüssig gehaltene Gleitkufen ausgebildet, wobei jede Gleitkufe einerseits zwei in Axialrichtung im Abstand voneinander angeordnete Abstützflächen zur Abstützung am äußeren Umfang des Mediumrohres und andererseits zumindest eine Abstützfläche zur Abstützung am inneren Umfang des Innenrohres aufweist. Diese Ausbildung der Gleitkufen ist einfach, läßt kaum Wärme vom Mediumrohr nach außen übergehen und ermöglicht ein Verschieben der Schüsse der das Mediumrohr umgebenden Rohranordnung, ohne daß große Sorgfalt nötig wäre und ohne daß eine größere Flächenpressung infolge Punktberührung möglich ist. Geschlossene Ringe in einem isolierenden Luftspalt zwischen konzentrischen Rohren, wie sie z.B. in der US-A-2 482 878 beschrieben sind, sind wärmetechnisch ungünstiger als die erfindungsgemäß bevorzugten Gleitkufen. Analoges gilt für bekannte, aus einer Vielzahl höckerartiger Einsätze gebildete Auflager zwischen konzentrischen Rohren, wie sie in der GB-A-404 644 beschrieben sind und sich nur aufwendig in ihrer Lage fixieren lassen.

Beim erfindungsgemäßen Rohrleitungssystem können die an den Verbindungsstellen der das Mediumrohr bzw. die Mediumrohre umgebenden Rohranordnung vorstehenden Schaumstoffkörper - ähnlich wie in der erwähnten US-A-3677 303 beschrieben - gemäß den Merkmalen der Patentansprüche 3 und 4 mittels Muffen bzw. Hülsen umhüllt werden.

Weitere vorteilhafte Merkmale des erfindungsgemäßen Rohrleitungssystemsergeben sich aus den weiteren Patentansprüchen.

Das erfindungsgemäße Verfahren zum Herstellen des Rohrleitungssystems besteht darin, daß in ein, vorzugsweise aus Faser- bzw. Asbestzement bestehendes, Außenrohr mindestens ein, vorzugsweise gleichfalls aus Faser- bzw. Asbestzement bestehendes Innenrohr eingeschoben wird, und danach der Hohlraum zwischen dem Außenrohr und Innenrohr mit elastischem Schaumstoff, insbesondere Polyurethan-Schaumstoff, ausgeschäumt wird, wobei der Schaumstoffkörper in axialer Richtung über die Enden des Außenrohres um, beispielsweise 0,5 bis 20 mm, vorsteht, worauf die einzelnen, solcherart gebildeten Rohrschüsse zusammengefügt werden, wobei die axialen Stirnflächen der Schaumstoffkörper in Axialrichtung gegeneinander gedrückt werden, und über die Verbindungsstelle der Außenrohre innen oder außen eine Hülse bzw. Muffe geschoben wird, und das Mediumrohr in das Innenrohr eingeführt und mittels Gleitstücken gelagert wird.

In Ausgestaltung dieses Verfahrens ist vorgesehen, daß bei den Verbindungsstellen der Mediumrohre zuerst die Enden derselben z.B.

durch Schweißen, Löten, Kleben od.dgl. miteinander verbunden werden, worauf über diese Verbindungsstelle ein Isolierkörper aufgebracht wird, der einen in axialer Richtung um, beispielsweise 0,5 bis 20 mm über seine Stirnseiten vorstehenden, Schaumstoffkörper aufweist, und danach die einzelnen Rohrschüsse unter Zwischenschaltung dieses Isolierkörpers in axialer Richtung gegeneinander gedrückt werden, und über den Isolierkörper eine Hülse bzw. Muffe geschoben wird, welche sich über die Enden der benachbarten Außenrohre erstreckt.

Die Erfindung wird nachstehend an Hand der Zeichnung, in der Ausführungsbeispiele des Erfindungsgegenstandes dargestellt sind, näher beschrieben.

Es zeigen:

Fig. 1 einen Querschnitt durch eine erfindungsgemäße Rohranordnung mit nur einem Mediumrohr (Einleiter),

Fig. 2 einen Querschnitt durch die erfindungsgemäße Rohranordnung mit zwei Mediumrohren (Zweileiter),

Fig. 3 einen Querschnitt durch eine erfindungsgemäße Rohranordnung mit drei Mediumrohren (Dreileiter),

Fig. 4 einen Querschnitt durch eine erfindungsgemäße Rohranordnung mit vier Mediumrohren (Vierleiter),

Fig. 5 einen Querschnitt durch eine erfindungsgemäße Rohranordnung mit mehreren Mediumrohren,und zusätzlichen Belüftungs- und Entwässerungsrohren (Mehrleiter),

Fig. 6 einen Schnitt entlang Linie VI-VI in Fig. 5,

Fig. 7 einen Längsschnitt durch die Rohranordnung im Bereich der Verbindungsstelle der Mantelrohre (Kurzverbindung),

Fig. 8 einen Längsschnitt durch eine Rohranordnung im Bereich der Verbindungsstelle von Mantelrohr und Mediumrohr (Langkupplung),

Fig. 9 einen Schnitt durch einen stehenden Abzweigschacht,

Fig. 10 einen Schnitt entlang Linie X-X in Fig. 9,

Fig. 11 einen Längsschnitt durch die innere, am Mantelrohr und Mediumrohr bestehende doppelwandige Rohrleitung,

Fig. 12 einen Schnitt gemäß Linie XII-XII in Fig. 11,

Fig. 13 die Einzelheit A aus Fig. 11 in vergrößertem Maßstab,

Fig. 14 eine vergrößerte Darstellung der Gleitkufen im Schnitt,

Fig. 15 eine Draufsicht auf Fig. 14 und

Fig. 16-20 verschiedene Ausführungsformen der Gleitkufen, jeweils im Schnitt.

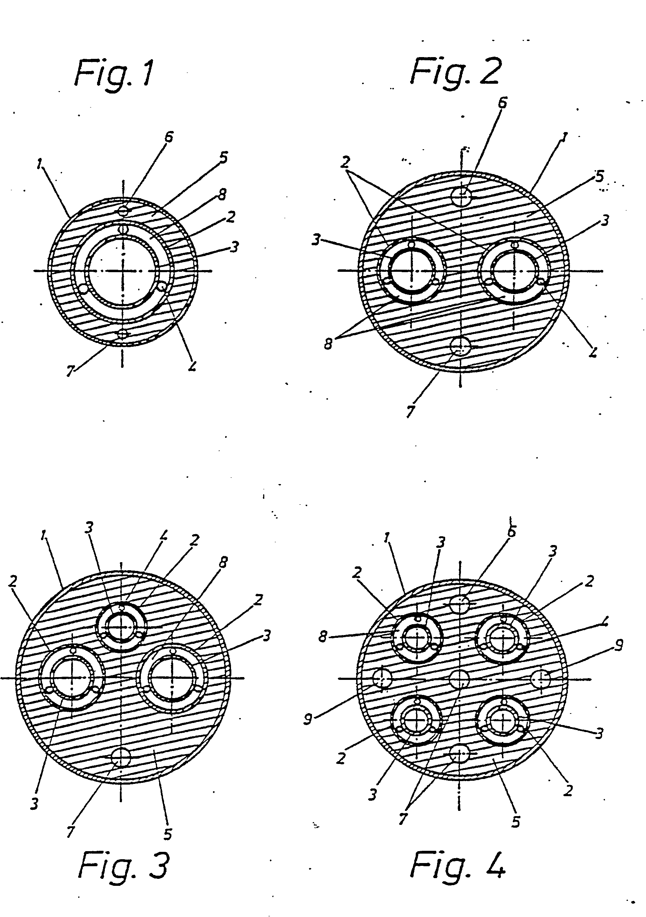

Bie dem Rohrleitungssystem gemäß Fig. 1 ist in einem Außen- bzw. Mantelrohr 1 aus Faser- bzw. Asbestzement ein Innen- bzw. Kernrohr 2 aus Faser- bzw. Asbestzement angeordnet, in dem mittels Gleitkufen 4 ein aus Metall bestehendes Mediumrohr 3 in axialer Richtung verschiebbar gelagert ist. Das Innenrohr 2 ist in dem Außenrohr 1 über dessen gesamte Länge wärmebrückenfrei angeordnet, wobei der ringförmige Hohlraum zwischen Außenrohr 1 und Innenrohr 2 mit elastischem Kunststoffschaum 5 im wesentlichen vollständig ausgeschäumt ist. In dem Schaumstoffkörper sind außerdem je ein Entlüftungsrohr 6 und Entwässerungsrohr 7 eingebettet.

Mittels des Schaumstoffkörpers, der vorzugsweise aus elastischem Hart-Polyurethan-Schaumstoff besteht, wird das Innenrohr lagerichtig im Außenrohr gehalten.

Der Ringspalt zwischen Innenrohr und Mediumrohr ist nicht mit Schaumstoff gefüllt, sondern als Luftspalt 8 ausgebildet.

Bei dem Rohrleitungssystem gemäß Fig. 2 sind in einem Außen- bzw. Mantelrohr 1 aus Faser- bzw. Asbestzement zwei im Abstand voneinander angeordnete Innenbzw. Kernrohre 2 aus Faser- bzw. Asbestzement angeordnet, in denen mittels Gleitkufen 4 je ein aus Metall bestehendes Mediumrohr 3 in axialer Richtung verschiebbar gelagert ist. Die Innenrohre 2 sind in dem Außenrohr 1 über dessen gesamte Länge wärmebrückenfrei angeordnet, wobei der ringförmige Hohlraum zwischen Außenrohr 1 und Innenrohren 2 mit elastischem Kunststoffschaum 5 im wesentlichen vollständig ausgeschäumt ist. In dem Schaumstoffkörper sind außerdem wieder je ein Entlüftungsrohr 6 und Entwässerungsrohr 7 eingebettet.

Bei dem Rohrleitungssystem gemäß Fig. 3 sind in einem Außen- bzw. Mantelrohr 1 aus Faser- bzw. Asbestzement drei im Abstand voneinander angeordnete Innen- bzw. Kernrohre 2 aus Faser- bzw. Asbestzement angeordnet, in denen mittels Gleitkufen 4 ein aus Metall bestehendes Mediumrohr 3 in axialer Richtung verschiebbar gelagert ist. Die Innenrohre 2 sind in dem Außenmantel 1 und in bezug aufeinander über die gesamte Länge wärmebrückenfrei angeordnet, wobei der ringförmige Hohlraum zwischen Außenrohr 1 und Innenrohren 2 mit elastischem Kunstschaum 5 im wesentlichen vollständig ausgeschäumt ist. In dem Schaumstoffkörper ist außerdem ein Entwässerungsrohr 7 eingebettet.

Wie ersichtlich, sind die Querschnitte der Innenrohre unterschiedlich groß ausgebildet, d.h. ein Innenrohr hat einen kleineren Querschnitt als die beiden anderen.

Bei dem Rohrleitungssystem gemäß Fig. 4 sind in einem Außen- bzw. Mantelrohr 1 aus Faser- bzw. Asbestzement vier im Abstand voneinander angeordnete Innen- bzw. Kernrohre 2 aus Faser- bzw. Asbestzement angeordnet, in denen mittels Gleitkufen 4 ein aus Metall bestehendes Mediumrohr 3 in axialer Richtung verschiebbar gelagert ist. Die Innenrohre 2 sind in dem Außenrohr 1 und in bezug aufeinander über die gesamte Länge wärmebrückenfrei angeordnet, wobei der ringförmige Hohlraum zwischen Außenrohr 1 und Innenrohren 2 mit elastischem Kunststoffschaum 5 im wesentlichen vollständig ausgeschäumt ist. In dem Schaumstoffkörper sind außerdem Entlüftungsrohre 6 und Entwässerungsrohre 7 sowie Hilfsrohre 8 eingebettet.

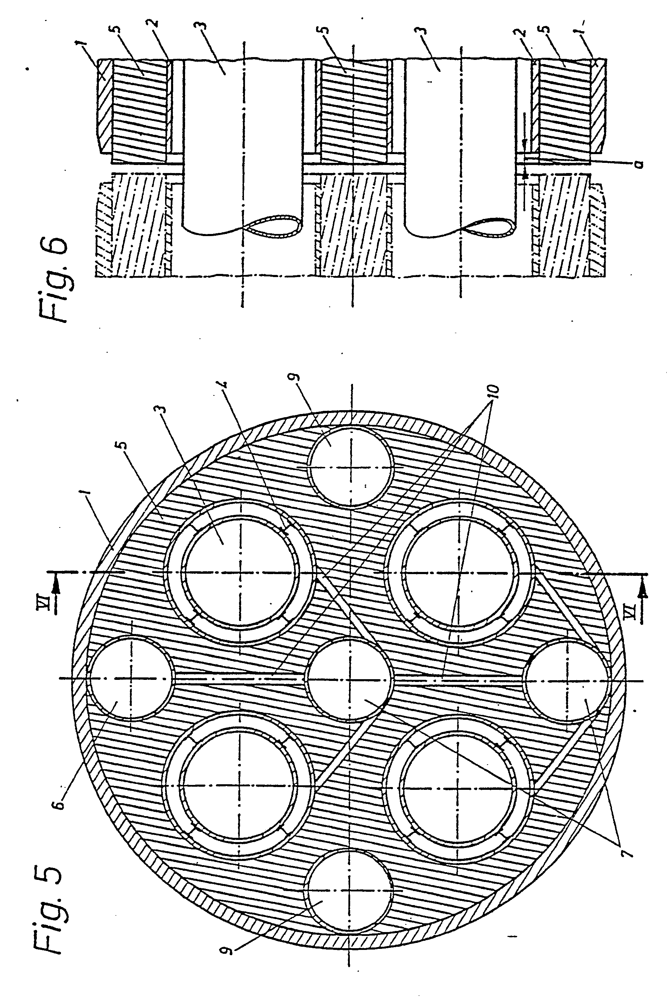

In Fig. 5 und 6 ist ein Rohrleitungssystem dargestellt, bei welchem in einem Außenrohr 1 vier Innenrohre 2 im Abstand voneinander wärmebrückenfrei angeordnet sind. Jedes Innenrohr beinhaltet ein Mediumrohr 3, das auf Gleitkufen 4 axial verschiebbar gelagert ist. Außerdem sind in dem Außenrohr 1 ein Belüftungsrohr 6, Entwässerungsrohre 7 und Meldeleiter-Hilfsrohre 9 angeordnet. Der Hohlraum zwischen Außenrohr 1 und den Innenrohren 2 ist wie bei den vorigen Ausführungsbeispielen mit Hart-Polyurethan-Schaumstoff 5 ausgeschäumt. In dem Schaumstoffkörper 5 sind Kanäle 10 ca. 5 bis 10 mm von der Schaumstoffoberfläche vertieft ausgebildet, die von den Innenrohren 2 zu den Entwässerungsrohren 7 führen.

Wie insbesondere Fig. 6 zeigt, ragt der Schaumstoffkörper 5 um ca. 5-10 mm über die Enden des Außenrohres 1 bzw. der Innenrohre 2 in axialer Richtung vor. Das Maß, um welches der Schaumstoffkörper 5 über die genannten Enden übersteht, ist in Fig. 6 mit a bezeichnet.

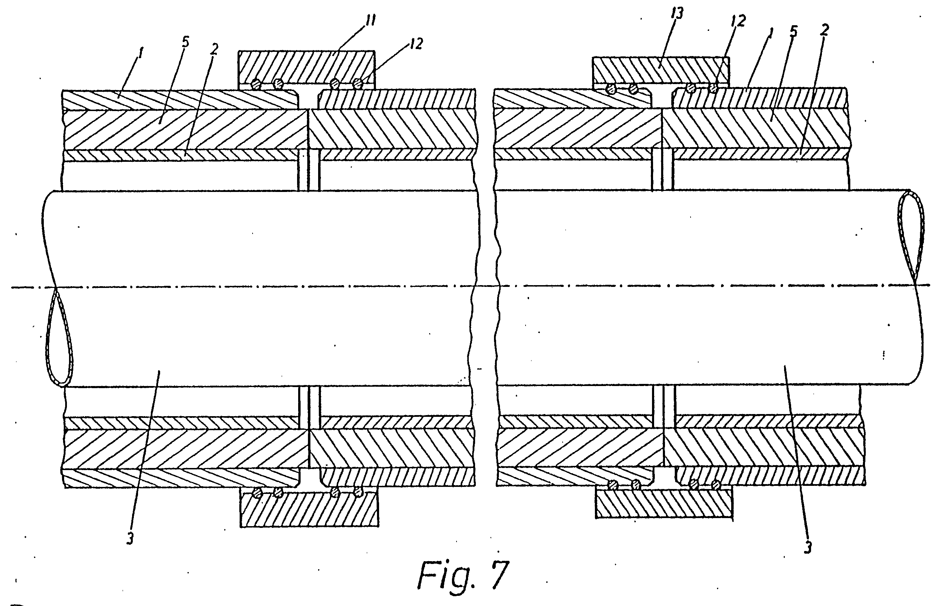

Fig. 7 zeigt die Verbindung der Außenrohre 1 bei einem vorstehend beschriebenen Rohrleitungssystem; es handelt sich hierbei um eine Kurzverbindung, wo keine Verbindung des Mediumrohres erforderlich ist. Die Darstellung bezieht sich auf ein Einleitersystem gemäß Fig. 1, ist jedoch prinzipiell auch für die Zwei- und Mehrleitersysteme gemäß Fig. 2-6 anwendbar.

In der linken Hälfte der Fig. 7 ist eine Muffenverbindung dargestellt, die die Außenrohre 1 im Bereich der benachbarten Enden umschließt. In die Muffe 11 sind z.B. zwei bis vier Dichtringe 12 eingelegt.

In der rechten Hälfte der Fig. 7 ist eine Hülsenverbindung dargestellt, die z.B. zwei bis vier über die Enden der Außenrohre 1 gespannte Dichtringe 12 umfaßt, die von einer Hülse 13 umgeben sind.

In beiden Fällen erfolgt ein vollflächiges Aneinanderpressen der Stirnflächen der Schaumstoffkörper 5 benachbarter Rohrschüsse.

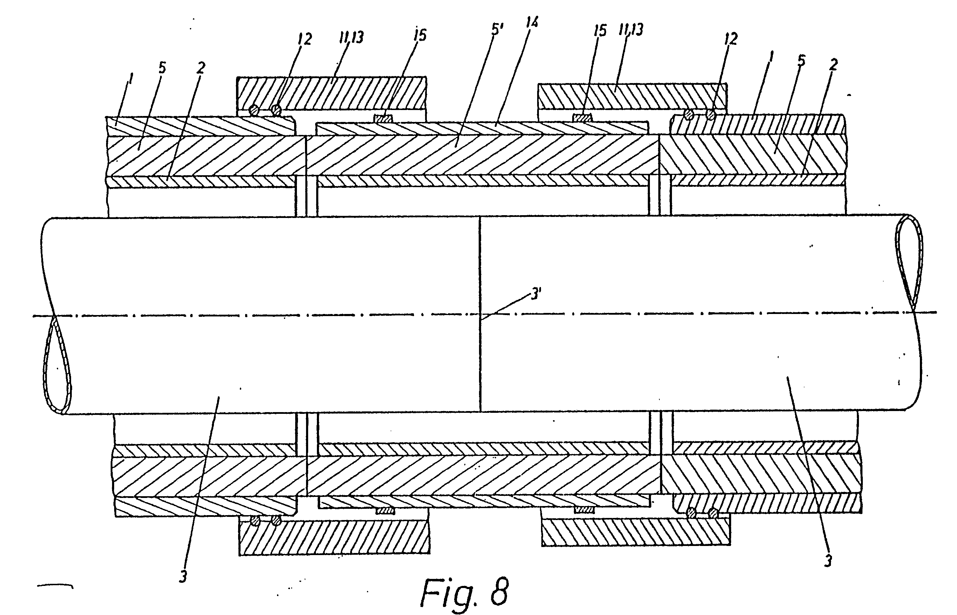

Fig. 8 zeigt die Verbindung der Außenrohre 1 bei einer vorstehend beschriebenen Rohranordnung; es handelt sich hierbei um eine Langverbindung, wo auch eine Verbindung der Mediumrohre erfolgt. Wie in Fig. 7, bezieht sich die Darstellung auf ein Einleitersystem gemäß Fig. 1, ist jedoch auch für die Zwei- und Mehrleitersysteme gemäß Fig. 2 - 6 anwendbar.

Diese Langverbindung umfaßt eine Muffe 11 bzw. Hülse 13 gemäß Fig. 7, die jedoch wesentlich länger als in Fig. 7 ausgebildet ist. Zwischen den benachbarten Außenrohren 1 ist ein Isolierkörper 14 angeordnet, der im Aufbau ident ist mit der Rohranordnung, und auch einen Schaumstoffkörper 5' besitzt, jedoch entsprechend der Anzahl der Innen- bzw. Mediumrohre 2 bzw. 3 in eine Anzahl Segmente geteilt ist. Diese Segmente werden mittels Spannbändern 15 zusammengehalten. Die Muffe 11 bzw. Hülse 13 erstreckt sich somit in axialer Richtung von dem Ende des einen Außenrohres über den Isolierkörper 14 hinweg zum Ende des anderen Außenrohres. Die Stirnflächen der über die Enden der Außenrohre 1 bzw. des Isolierkörpers 14 vorstehenden Schaumstoffkörper 5 bzw. 5' sind wie beim Ausführungsbeispiel gemäß Fig. 7 fest aneinander gepreßt. Die Verbindungsstelle 3' der Mediumrohre 3 ist gegenüber den axialen Stirnflächen der Schaumstoffkörper 5 und den Enden der Außenrohre 1 und Innenrohre 2 in axialer Richtung versetzt, und ist innerhalb des Isolierkörpers 14 angeordnet. Das Verbinden der aneinanderstehenden Enden der Mediumrohre erfolgt in bekannter Weise durch Schweißen, Löten, Kleben usw.

Der Schaumstoffkörper 5' besteht aus elastischem Kunststoffschaum, vorzugsweise aus dem gleichen Werkstoff wie der Schaumstoffkörper 5, z.B. Hart-Polyurethanschaum.

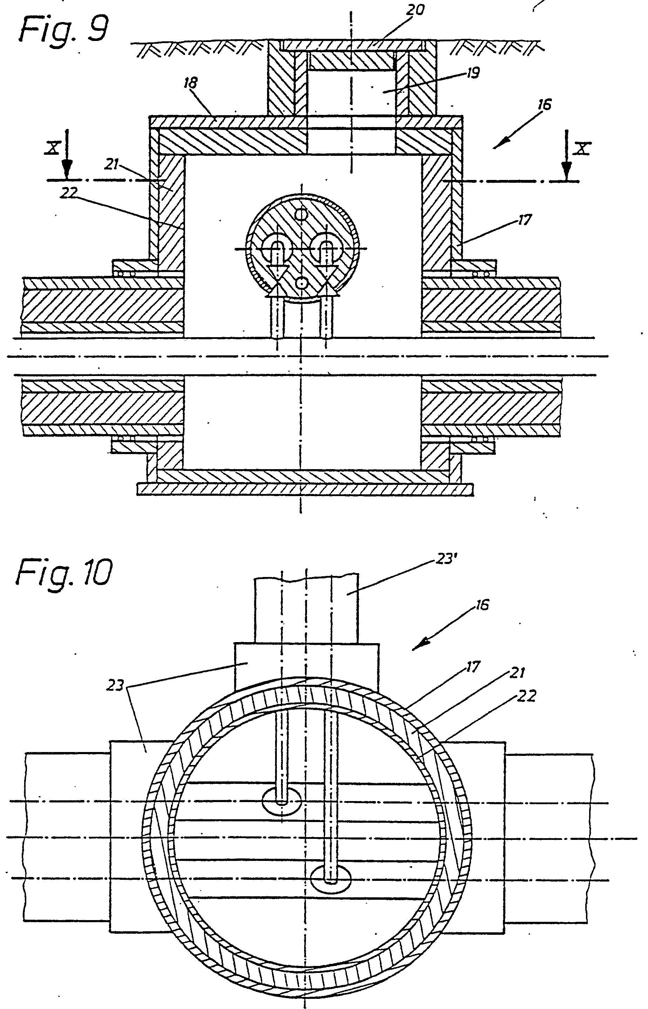

Fig. 9 und 10 zeigen einen stehenden Abzweigschacht für ein erfindungsgemäßes Rohrleitungssystem, der entsprechend isoliert ausgebildet ist. Der insgesamt mit 16 bezeichnete Schacht umfaßt einen Schachtkörper 17 mit einer Schachtdecke 18 und einen Einstiegdom 19, der mit einem isolierten Deckel 20 oberflächenwasserdicht und wärmegedämmt verschließbar ist. Der gesamte Schacht ist mit einer Innenauskleidung 21 aus Hart-Polyurethan-Schaumstoff versehen, und innen mit einer wärmereflektierenden Schicht 22 ausgekleidet. Die Abzweigkupplungen bzw. Schachtkupplungen 23 sind wie der Rohrstrang selbst isoliert.

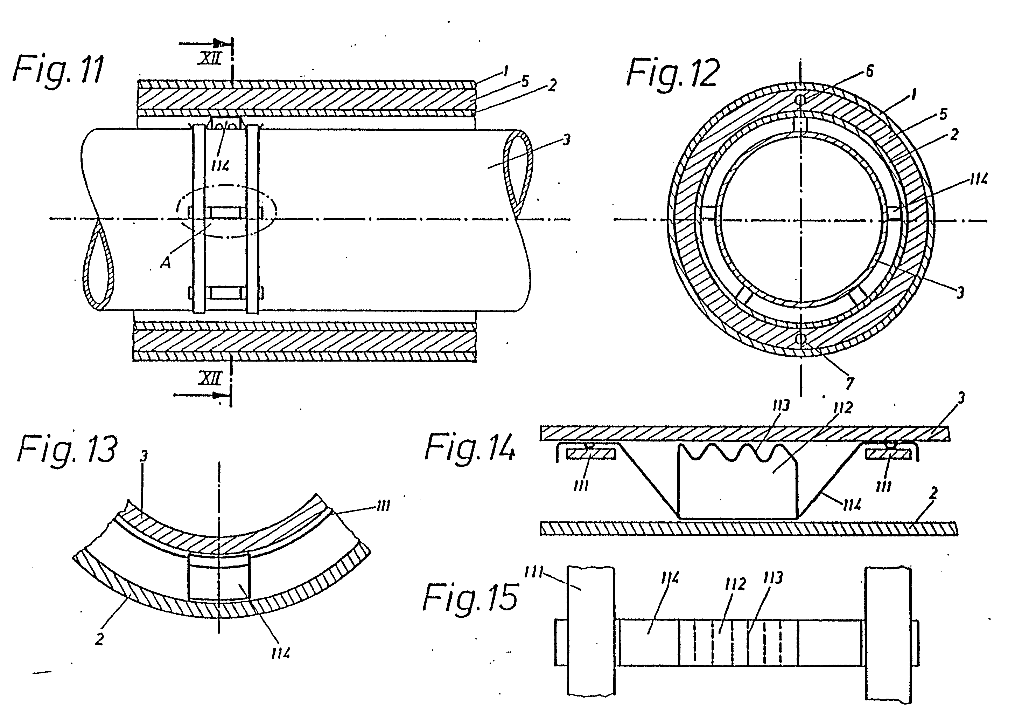

Bei dem Rohrleitungssystem gemäß Fig. 11 und 12 ist in einem Außen- bzw. Mantelrohr 1 aus Faser- bzw. Asbestzement ein Innen- bzw. Kernrohr 2 aus Faserbzw. Asbestzement angeordnet, in dem mittels Gleitkufen 114 ein aus Metall bestehendes Mediumrohr 3 in axialer Richtung verschiebbar gelagert ist. Das Innenrohr 2 ist in dem Außenrohr 1 über dessen gesamte Länge wärmebrückenfrei angeordnet, wobei der ringförmige Hohlraum zwischen Außenrohr 1 und Innenrohr 2 mit elastischem Kunststoffschaum 5 im wesentlichen vollständig ausgeschäumt ist. In dem Schaumstoffkörper sind außerdem je ein Entlüftungsrohr 6 und Entwässerungsrohr 7 eingebettet.

In Fig. 12 bis 20 ist die Gleitkufe 114 näher dargestellt. Die Gleitkufe 114 besitzt die Form eines brückenförmigen mehrfach gebogenen bzw. abgewinkelten Bandes, das zwei in Axialrichtung im Abstand voneinander liegende Abstützflächen 118, 119 zur Abstützung am äußeren Umfang des Mediumrohres 3 und eine Abstützfläche 110 zur Abstützung am inneren Umfang des Innenrohres 2 aufweist. Mehrere solcher Gleitkufen 114 sind im Abstand voneinander am Umfang des Mediumrohres 3 in einer einzigen Radialebene desselben angeordnet und sind mittels zweier Spannbänder 111 kraft- bzw. reibungsschlüssig am Umfang des Mediumrohres 3 gehalten. Die Spannbänder 111 können mit den Gleitkufen 114, z.B. durch Punktschweißung verbunden werden. Es versteht sich, daß zur Abstützung eines Mediumrohres 3 je nach Länge desselben zwei oder mehrere solcher in einer Radialebene angeordneter Gruppen von Gleitkufen verwendet werden.

Wie insbesondere Fig. 14 und 15 zeigen, ist die Gleitkufe 114 mit einem mittigen, in einer Axialebene verlaufenden Steg 112 versehen, der sich quer durch den Ringspalt zwischen dem Innenrohr 2 und dem Mediumrohr 3 erstreckt und auf seiner dem Innenrohr 2 zugewandten Seite mit der Gleitkufe 114 fest verbunden ist. Auf seiner dem Mediumrohr 3 zugewandten Seite ist der Steg 112 mit Rillen, Kerben od.dgl. 113 versehen.

Beim dargestellten Ausführungsbeispiel sind die Abstützflächen 118,119,110 eben ausgebildet. Die Abstützflächen können jedoch gekrümmt ausgebildet werden. Insbesondere kann die radial äußere Abstützfläche 110, die zur Abstützung der Gleitkufe 114 am inneren Umfang des Innenrohres 2 dient, konvex gekrümmt ausgebildet werden. Es ist hierbei zweckmäßig, daß der Krümmungsradius der Abstützfläche kleiner ist als der Krümmungsradius des inneren Umfanges des Innenrohres 2.

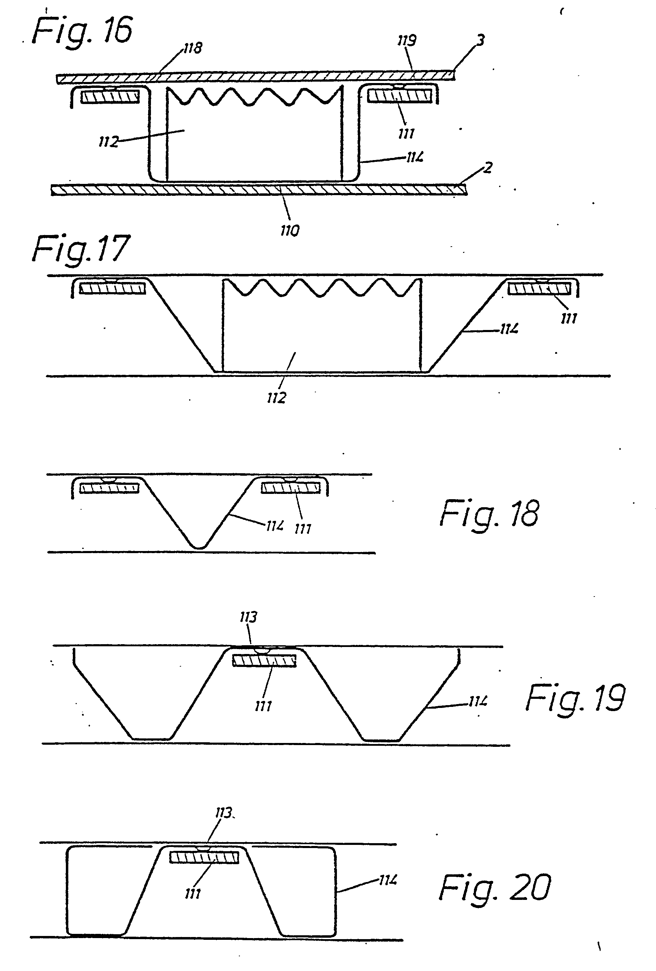

Beim Ausführungsbeispiel gemäß Fig. 16 ist die zur axialen Führung des Mediumrohres 3 in dem Innenrohr 2 dienende Gleitkufe 114 an einem im wesentlichen U-förmig gebogenen Band gebildet. Die Unterseite des U bildet hierbei die Abstützfläche 110 zur Abstützung am inneren Umfang des Innenrohres 2, wogegen die Abstützflächen 118, 119 zur Abstützung am äußeren Umfang des Mediumrohres 3 von von den oberen Rändern des U abstehenden Schenkeln gebildet werden. An diesen Schenkeln liegen die Spannbänder 111 an und halten die Gleitkufen 114 am Mediumrohr 3 fest. Der Steg 112 ist wie in Fig. 14 und 15 ausgebildet.

Fig. 17 zeigt eine Gleitkufe 114, die aus einem etwa trapezförmig abgebogenen Band mit abstehenden Schenkeln und Steg 112 besteht.

Der Steg 112 muß nicht mittig, sondern kann auch ein- oder beidseitig an den äußeren axialen Enden sein.

Fig. 18 zeigt eine Gleitkufe 114, die aus einem etwa dreieckförmig bzw. V-förmig gebogenen Band mit abstehenden Schenkeln für die Spannbänder 111 besteht. Bei dieser Ausführung ist z.B. kein Steg erforderlich.

Fig. 19 und 20 zeigen Gleitkufen 114 in Form von Doppelbägeln bzw. Doppelkufen, wobei das Spannband 111 an einem mittig angeordneten Steg 113 anliegt.

Die Gleitkufen können aus Metall, insbesondere Stahl, hergestellt, und gegebenenfalls oberflächenbehandelt bzw. mit einer Beschichtung versehen werden, damit ein entsprechender Korrosionsschutz sowie eine Reibungsverminderung gegeben ist.

Die Erfindung ist anwendbar auf Rohrstränge beliebigen Querschnittes, also auch unrunden oder eckigen Querschnittes, z.B. ovalen, elliptischen oder vieleckigen Querschnittes bzw. Querschnittes eines Releaux-Dreiecks.

Als Werkstoffe für Außenrohr und Innenrohr kommen neben Faser- bzw. Asbestzement auch Beton, Kunstharzbeton, Steingut, Kunststoffe, Metall usw. in Betracht.

Wenn die Erfindung für Fernheizsysteme angewendet wird, so kann die Rohranordnung insbesondere sowohl zum Transport "kalter Fernwärme", geothermischer Wässer, Heizwassersysteme bis 90°, Heizwassersysteme bis 130°, und Heizwassersysteme bis 170° C verwendet werden.

Beim Transport "kalter Fernwärme" kommt als Anwendungsbereich der Transport von Kühlwässern mit sehr niedrigem Temperaturniveau von Kraftwerken und Industrien in Frage. Im Einrohrsystem wird das Medium zu den Verbrauchern transportiert und dort mittels Wärmepumpen auf die benötigte Heiztemperatur gebracht. Das durch die Wärmepumpen abgekühlte Wasser wird örtlich in einen Vorfluter abgeführt. Solche Systeme sind sehr wirtschaftlich, da sie mit geringstem Aufwand, ähnlich einer Wasserleitung, verlegt werden können. Untersuchungen haben ergeben, daß auch ohne Isolierung noch relativ "warmes Wasser" mit ca. 15-20° C über mehrere Kilometer wirtschaftlich transportiert werden kann, eine Isolierung auch aus ökologischen Gründen jedoch vorzusehen ist.

Beim Transport geothermischer Wässer werden insbesondere Rohre aus Asbestzement verwendet, wobei diese entsprechend den Erfordernissen, mit einer Wärmedämmung versehen werden. Die bei Stahlrohrsystemen aufgetretenen Korrosionen durch Sickerwässer können bei Verwendung von Rohren aus Asbestzement, einem nichtmetallischen Werkstoff, ausgeschlossen werden. Selbstverständlich ist dafür Sorge zu tragen, daß nur Isoliermaterial verwendet wird, welches auch bei Feuchtigkeitseinfluß funktionstüchtig bleibt, also z.B. keine Faserdämmstoffe.

Bei den vorstehend beschriebenen Systemen handelt es sich um offene Kreisläufe (1-Rohrsystem), d.h., daß das Mediumwasser nach Wärmeentnahme durch den Verbraucher (z.B. Wärmepumpe oder Umformer) in den nächstgelegenen Vorfluter abgeleitet wird.

Bei Heizwassersystemen bis 90° C wird ein Wärmetransportsystem verwendet, das aus Asbestzement-Druckrohren als Mediumrohre für Vor- und Rücklauf, einem gemeinsamen Mantelrohr aus Asbestzement sowie einer Verschäumung des Hohlraumes zwischen Medium- und Mantelrohr mittels Polyurethanschaum besteht. Die Verbindung der Rohre (Medium- und Mantelrohre) erfolgt mittels herkömmlicher Asbestzement-Kupplungen, die mit heißwasserbeständigen Dichtungen ausgestattet sind. Auf Grund der Dehnungsmöglichkeiten der Rohre in jeder Kupplung kann auf zusätzliche Dehnungskompensatoren sowie Fixpunkte gänzlich verzichtet werden. Daher sind gegenüber herkömmlichen Systemen große Einsparungen bei den Bau- und Verlegearbeiten möglich.

Bei dem Heizwassersystem bis 90° C ist ein geschlossener Kreislauf (2-Rohrsystem) vorgesehen, bei welchem das Rücklaufwasser zwecks neuerlicher Erwärmung wieder der Kesselanlage zugeführt wird. Die Asbestzementrohre für die Mediumrohre können je nach chemischer Zusammensetzung des durchzuleitenden Wassers und dessen Temperatur auch mit Beschichtungen versehen werden.

Bei Heizwassersystemen bis 130° C sowie Heizwassersystemen bis 170° C ist der Rohraufbau gleich, u.zw. werden in ein Mantelrohr aus Asbestzement ein oder mehrere Kernrohre aus Asbestzement eingebaut, in welche entweder werkseitig oder an der Baustelle, mittels Gleitkufen vom Kernrohr distanziert, die Mediumrohre aus Stahl eingezogen werden. Der Raum zwischen Mantelrohr und Kernrohr wird mit Polyurethan ausgeschäumt, wobei die Isolierstärke entsprechend den Temperaturbereichen - 130° C und 170° C - gewählt wird.

Die Systeme sind so ausgelegt, daß die Verbindung der Asbestzement-Mantelrohre nur im Bereich der Stahlrohr-Schweißnähte mittels isolierter Langkupplungen (bis Stahl DN 200 alle 11 m und darüber alle 16 m) erfolgt. Die dazwischenliegenden Mantelrohre werden mittels Kurzkupplungen verbunden.

Diese Kupplungsanordnung hat den Vorteil, daß jede an der Baustelle ausgeführte Schweißnaht in den Bereich einer Langkupplung zu liegen kommt, und daher die Überprüfung dieser Schweißnähte ohne Verzögerung der weiteren Verlegung erfolgen kann.

Diese Systeme bieten auch die Möglichkeit, Stahlrohrstränge bis zu 300 m in einem Arbeitsgang in das bereits verlegte Mantelrohr und die darin enthaltenen Kernrohre einzuziehen.

Weiters besteht auch die Möglichkeit, längere Stahlrohrstrecken auszutauschen, wobei bei entsprechend großen Kernrohren auch spätere Kapazitätserweiterungen durch Einbau größerer Stahlrohrnennweiten ohne Ausbau des gesamten Systems möglich sind.

Die vorstehend beschriebenen Systeme können für städtische Fernwärmenetze und für große Überlandtransportleitungen Verwendung finden, wobei im zweiten Fall sowohl eine unterirdische Verlegung als auch eine oberirdische Verlegung möglich ist.

Um über das gesamte Fernwärmesystem, beginnend beim Wärmeerzeuger und endend beim Wärmeverbraucher, eine gleichmäßige Isolierung zu erreichen, werden auch sämtliche zu einem kompletten System gehörenden Bauteile entsprechend isoliert. Damit ist gewährleistet, daß es im gesamten System zu keinen Schwachstellen bei der Isolierqualität kommen kann. Untersuchungen haben nämlich ergeben, daß in einzelnen Fällen die Wärmeverluste durch Schächte, Fixpunkte, Kompensatoren und sonstige Bauteile ein Vielfaches jener der Rohrleitungen selbst sind. Außerdem wird durch die oftmals mangelhafte Bauausführung eine wesentliche Funktonsbeeinträchtigung der Isolierung und damit wiederum eine Erhöhung der Betriebskosten verursacht.

Damit diese Schwachstellen vermieden werden, werden vorisolierte Rohrleitungen, vorisolierte Kupplungen, vorisolierte Fixpunkte und vorisolierte Schachtbauten verwendet.

Durch die werkseitige Fertigung all dieser Komponenten ist gewährleistet, daß der bei der Planung zugrundegelegte Wärmeverlust auch tatsächlich nicht überschritten wird. Unangenehme Überraschungen in Form von nicht erfaßbaren Wärmeverlusten, welche sonst erst nach Inbetriebnahme der Fernheiznetze sichtbar werden, können dadurch mit Sicherheit ausgeschlossen werden.

Um den Vorteil einer werkseitigen Vorfertigung noch zu verstärken, wird auch für die installationstechnischen Einrichtungen ein Bauteilsystem verwendet, welches z.B. vorgefertigte Abzweigschächte, vorgefertigte Pumpenschächte, vorgefertigte Kompensatorschächte, und vorgefertigte Übergabestationen umfaßt.

Bei der Ausführung dieser Anlagenteile kann auf die individuellen Wünsche der Fernwärmebetreiber Rücksicht genommen werden, jedoch auch gleichzeitig eine Standardisierung in technischer und wirtschaftlicher Hinsicht erfolgen. Es ist auch vorgesehen, diese Bauteile auf Wunsch bereits fertig installiert auf die Baustelle zu liefern.

Auf Grund der weitgehend kompletten Vorfertigung können nicht nur technisch und wirtschaftlich optimale Produkte angeboten werden, sondern es wird auch erreicht, daß Fernwärmenetze in Zukunft in wesentlich kürzerer Baudauer und daher mit geringerem Kostenaufwand erstellt werden können. Die dafür wesentlichen Kriterien der Systeme sind: der Einsatz von erfindungsgemäßen Mehrleiter-Mantelrohren, die wesentlich kleineren Außenabmessungen gegenüber traditionellen Systemen und das komplette Programm an vorgefertigten Systembauteilen.

Durch die Erfindung können somit gegenüber den zur Zeit in Anwendung befindlichen Fernwärmesystemen große Einsparungen sowohl bei den Baukosten als auch - was noch entscheidender ist - sehr starke Reduzierungen der Betriebskosten durch geringere Wärmeverluste erreicht werden.

**Beispiel 1:**

Das Beispiel betrifft die Fernwärmeversorgung einer Kleinstadt, wobei auf Grund der geringen Vorlauftemperatur von 90°C ein Heizwassersystem mit 90°C vorgesehen wurde.

Die Problemstellung war, in dieser Kleinstadt aus einem Heizkraftwerk ca. 320 Abnehmer mit insgesamt ca. 7,5 MW Gesamtanschlußleistung zu versorgen. Eine zusätzliche Auflage bestand darin, das System so zu wählen, daß trotz anfangs geringer Anschlußdichte das Netz nachträglich leicht ausbaufähig ist.

Es wurden folgende anlagenspezifische Werte ermittelt:

Gesamte Anschlußleistung ca. 7,5 MW
Anzuschließende Verbraucher ca. 320
Gesamte Trassenlänge (vom Heizkraftwerk bis Verbraucher-Hauseintritt) ca. 13400 m
Wärmeverlust pro 1fm Trasse (bei 90/50°C) ca. 20 W
Gesamt-Wärmeverlust ca. 3 %

Wie aus vorstehender Aufstellung ersichtlich ist, lassen sich für den 1fm Fernwärmetrasse bei Leitungsdimensionen von DN 20 - DN 250 Einsparungen von ca. 50% gegenüber vorisolierten Stahlrohren erzielen. Ein Vergleich mit der Haubenkanalbauweise war nicht relevant, da die Bodenverhältnisse und die topographische Lage dieses Systems von vornherein ausgeschlossen haben.

**Beispiel 2:**

Das Beispiel betrifft die wirtschaftlichste Lösung für die Errichtung einer Fernwärme-Transportleitung mit folgenden technischen Vorgaben:

Zu transportierendes Medium Heißwasser 130/65°C
Zu transportierende Heizleistung 230 MW
Streckenlänge ca. 17500 m

Es bestand die Auflage, ein System vorzuschlagen, das bei gleichem Regelquerschnitt sowohl eine Verlegung in oberals auch unterirdischer Bauweise ermöglicht. Auf Grund der hohen Transportleistung wurde vorgeschlagen, den Leitungsquerschnitt auf zwei Vor- bzw. Rückläufe aufzuteilen. Dies ergab nicht nur für den Verlegequerschnitt die optimale Lösung, sondern brachte auch noch den Vorteil, in Summe geringere Installationskosten bei den erforderlichen 4 x Stahlnennweite 450 zu erzielen, als bei 2 x Stahlnennweite 650.

Die Wärmeverluste dieses erfindungsgemäßen Mehrleitersystems mit Heizwasser von 130°C bzw. 170°C sind über die gesamte Streckenlänge von ca. 17500 m mit einem maximalen Temperaturabfall von ca. 1 K zu erwarten.

Dieser außergewöhnlich niedrige Wärmeverlust konnte durch die Anwendung des Mehrleitersystems und durch konsequentes Ausschalten aller Schwachstellen (Auflager, Fixpunkte, Schächte) mittels vorgefertigter und vorisolierter Bauteile erzielt werden.

Die Baukosten für dieses System (incl. Erdarbeiten) sind wesentlich niedriger als bei bekannten Systemen anzusetzen, wobei auch bei diesem System wiederum sämtliche Komponenten aus werkseitig vorgefertigten Bauteilen bestehen. Es sind darin sämtliche Fixpunkte, Kompensatorschächte und Abzweigschächte in wärmegedämmter Ausführung enthalten.

Im Vergleich dazu wurde für die Ausführung in Haubenkanalbauweise mit wesentlich höheren Gesamtkosten ein wesentlich höherer Temperaturverlust von ca. 7 K auf die ca. 17500 m Trassenlänge errechnet.

**Patentansprüche**

1. Rohrleitungssystem, insbesondere Mehrkanalrohrleitungssystem, zum Transport von mindestens einem flüssigen und/oder gasförmigen Medium bzw. Suspensionen, beispielsweise Fernheizleitung, Kühlmittelleitung, Erdöl- bzw. Erdgasleitung, mit einem Außenrohr (1) und mit mindestens einem Innenrohr (2) sowie gegebenenfalls zusätzlichen innerhalb des Außenrohres (1) angeordneten Rohren, beispielsweise Ent- und Belüftungsrohren (6,7,8), wobei in dem Innenrohr (2) ein aus Metall oder Kunststoff bestehendes Mediumrohr (3) unter Freilassung eines Luftspaltes zwischen dem Innenrohr (2) und dem Mediumrohr (3) mittels Führungsstücken (4) in axialer Richtung verschiebbar gelagert ist, und wobei der Hohlraum zwischen dem Außenrohr (1) und dem Innenrohr (2) bzw. den Innenrohren (2) sowie gegebenenfalls den zusätzlichen Rohren (6,7,8) mit elastischem Kunststoffschaum vorzugsweise Polyurethanschaum, ausgeschäumt ist, so daß das bzw. die im Außenrohr (1) angeordneten Rohre (2,6,7,8) mittels dieses Kunststoffschaumkörpers (5) im Abstand voneinander gehalten und wärmebrückenfrei angeordnet ist bzw. sind, dadurch gekennzeichnet, daß der Kunststoffschaumkörper (5) der einzelnen mit einem Außenrohr (1) und mindestens einem Innenrohr (2) ausgebildeten Schüsse an deren Verbindungsstellen in axialer Richtung über die stirnseitigen Enden des Außenrohres (1) und vorzugsweise auch des bzw. der Innenrohre (2), um beispielsweise 0,5 bis 20 mm, vorsteht, so daß die Kunststoffschaumkörper (5) benachbarter Rohrschüsse vollflächig aneinander anliegen.

2. Rohrleitungssystem nach Anspruch 1, dadurch gekennzeichnet, daß die das axiale Verschieben der Rohrschüsse (1, 2, 5) auf dem bzw. den Mediumrohren (2) ermöglichenden Führungsstücke (4) als am äußeren Umfang des Mediumrohres (3) mittels eines Spanngliedes, z.B. Spannbandes (111), kraft- bzw. reibungsschlüssig gehaltene Gleitkufen (114) ausgebildet sind, wobei jede Gleitkufe (114) einerseits zwei in Axialrichtung im Abstand voneinander angeordnete Abstützflächen (118, 119) zur Abstützung am äußeren Umfang des Mediumrohres (3) und andererseits zumindest eine Abstützfläche zur Abstützung am inneren Umfang des Innenrohres (2) aufweist.

3. Rohrleitungssystem nach Anspruch 1 oder 2, dadurch gekennzeichnet, daß bei durchlaufendem Mediumrohr (3) an der Verbindungsstelle benachbarter Außenrohre (1) diese außen oder innen von einer Muffe bzw. Hülse (11,13) umgeben sind, welche sich unter Zwischenschaltung von, gegebenenfalls vorgespannten, Dichtringen (12) über die Enden benachbarter Außenrohre (1) erstreckt (Fig. 7).

4. Rohrleitungssystem nach Anspruch 1 oder 2, dadurch gekennzeichnet, daß bei der Verbindungsstelle benachbarter Mediumrohre (3) die Enden der benachbarten Außenrohre und Innenrohre (2) hinsichtlich dieser Verbindungsstelle in axialer Richtung versetzt sind, wobei zwischen die benachbarten Rohrschüsse ein im wesentlichen gleichartig aufgebauter, koaxialer Isolierkörper (14) dicht anliegend eingesetzt ist, und die Außenrohre (1) außenseitig von einer Muffe bzw. Hülse (11, 13) umschlossen sind, welche sich vom Ende des einen Rohrschusses über den Isolierkörper (14) hinweg zum Ende des anderen Rohrschusses erstrecken (Fig. 8).

5. Rohrleitungssystem nach Anspruch 4. dadurch gekennzeichnet, daß der Isolierkörper (14) aus zwei oder mehreren, mittels mindestens eines Spanngliedes (15) zusammengehaltenen Segmenten besteht, wobei die Trennfugen zwischen den Elementen vorzugsweise in Axialebenen verlaufen.

6. Rohrleitungssystem nach einem der Ansprüche 1-5. dadurch gekennzeichnet, daß die axialen Stirnseiten des Schaumstoffkörpers (5) und/oder des Isolierkörpers (14) in an sich bekannter Weise im wesentlichen eben ausgebildet sind, wobei an diesen Stirnseiten Vorsprünge und/oder Vertiefungen zur Lagesicherung vorgesehen sind.

7. Rohrleitungssystem nach einem der Ansprüche 4-6, dadurch gekennzeichnet, daß der Schaumstoffkörper (5') des Isolierkörpers (14) über die stirnseitigen Enden desselben um, beispielsweise 0,5 bis 20 mm, vorsteht, so daß beim Zusammenfügen der Schaumstoffkörper (5') des Isolierkörpers (14) vollflächig gegen den Schaumstoffkörper (5) der Rohranordnung zur Anlage kommt (Fig. 8).

8. Rohrleitungssystem nach einem der Ansprüche 1-7, dadurch gekennzeichnet, daß in dem Schaumstoffkörper (5) wenigstens ein, vorzugsweise in einer radialen Ebene, verlaufender Kanal (10) ausgebildet ist, der vom Umfang eines Innenrohres (2) ausgehend zu einem Ent- bzw. Belüftungsrohr (6, 7) führt (Fig. 5).

9. Rohrleitungssystem nach Anspruch 2, dadurch gekennzeichnet, daß die Gleitkufen (114) aus einem in einer Axialebene verlaufenden, vorzugsweise U-, V- oder W-förmig gebogenen Band mit an den Enden abstehenden Schenkeln bestehen, welche die Abstützflächen (118, 119) der Gleitkufe (114) an dem Mediumrohr (3) bilden (Fig. 14, 16, 17, 18).

10. Rohrleitungssystem nach Anspruch 9, dadurch gekennzeichnet, daß die Spannglieder (111) an die Abstützflächen (118, 119) an dem Mediumrohr (3) bildenden Schenkeln außenseitig anliegen, und gegebenenfalls mit diesen, beispielsweise durch Punktschweißung, verbunden sind (Fig. 14, 16, 17, 18).

11. Rohrleitungssystem nach Anspruch 9 oder 10, dadurch gekennzeichnet, daß die Gleitkufe (114) mindestens einen, vorzugsweise mittig oder seitlich angeordneten, insbesondere in einer Axialebene verlaufenden Steg (112) aufweist, der auf seiner dem Innenrohr (2) zugewandten Seite mit der Gleitkufe (114) verbunden ist und sich im wesentlichen bis in den Bereich des äußeren Umfanges des Mediumrohres (3) erstreckt (Fig. 14).

12. Rohrleitungssystem nach Anspruch 11, dadurch gekennzeichnet, daß der Steg (112) auf seiner dem Mediumrohr (3) zugewandten Seite mit Rillen, Kerben od.dgl (113) versehen ist (Fig. 14).

13. Rohrleitungssystem nach einem der Ansprüche 9-12, dadurch gekennzeichnet, daß die Abstützflächen (118, 119) der Gleitkufe (114) im wesentlichen eben ausgebildet sind (Fig. 14-20).

14. Rohrleitungssystem nach einem der Ansprüche 9-13, dadurch gekennzeichnet, daß die radial äußere Abstützfläche (110) der Gleitkufe (114), die zum Abstützen der Gleitkufe (114) am inneren Umfang des Innenrohres (2) dient, konvex gekrümmt ausgebildet ist.

15. Rohrleitungssystem nach Anspruch 14, dadurch gekennzeichnet, daß der Krümmungsradius der Abstützfläche (110) der Gleitkufe (114) kleiner ist als der Krümmungsradius des inneren Umfanges des Innenrohres (2).

16. Verfahren zum Herstellen des Rohrleitungssystems nach einem der Ansprüche 1 - 15, dadurch gekennzeichnet, daß in ein, vorzugsweise aus Faser- bzw. Asbestzement bestehendes, Außenrohr mindestens ein, vorzugsweise gleichfalls aus Faser- bzw. Asbestzement bestehendes Innenrohr eingeschoben wird, und danach der Hohlraum zwischen dem Außenrohr und Innenrohr mit elastischem Schaumstoff, insbesondere Polyurethan-Schaumstoff, ausgeschäumt wird, wobei der Schaumstoffkörper in axialer Richtung über die Enden des Außenrohres um, beispielsweise 0,5 bis 20 mm, vorsteht, worauf die einzelnen, solcherart gebildeten Rohrschüsse zusammengefügt werden, wobei die axialen Stirnflächen der Schaumstoffkörper in Axialrichtung gegeneinander gedrückt werden, und über die Verbindungsstelle der Außenrohre eine Hülse bzw. Muffe geschoben wird, und das Mediumrohr in das Innenrohr eingeführt und mittels Gleitstücken gelagert wird.

17. Verfahren nach Anspruch 16, dadurch gekennzeichnet, daß bei den Verbindungsstellen der Mediumrohre zuerst die Enden derselben z.B. durch Schweißen, Löten, Kleben od.dgl. miteinander verbunden werden, worauf über diese Verbindungsstelle ein Isolierkörper aufgebracht wird, der einen in axialer Richtung um, beispielsweise 0,5 bis 20 mm über seine Stirnseiten vorstehenden, Schaumstoffkörper aufweist, und danach die einzelnen Rohrschüsse unter Zwischenschaltung dieses Isolierkörpers in axialer Richtung gegeneinander gedrückt werden, und über den Isolierkörper eine Hülse bzw. Muffe geschoben wird, welche sich über die Enden der benachbarten Außenrohre erstreckt.

**Claims**

1. Pipeline system, especially a multi-channel pipeline system, for transporting at least one liquid and/or gaseous medium or suspensions, for example a long-distance heating line, coolant line, crude-oil or natural-gas line, with an outer pipe (1) and with at least one inner pipe (2) and, if appropriate, additional pipes arranged inside the outer pipe (1), for example air-relief and ventilating pipes (6, 7, 8), a medium pipe (3) consisting of metal or plastic being mounted displaceably in the axial direction in the inner pipe (2) by means of guide pieces (4), with an air gap left between the inner pipe (2) and the medium pipe (3), and the cavity between the outer pipe (1) and the inner pipe (2) or inner pipes (2) and, if appropriate, the additional pipes (6,7,8) being filled with elastic plastic foam, preferably polyurethane foam, so that the pipe or pipes (2, 6, 7, 8) arranged in the outer pipe (1) is or are held at a distance from one another by means of this plastic foam body (5) and is or are arranged free of heat bridges, characterized in that the plastic foam body (5) of the individual sections formed with an outer pipe (1) and at least one inner pipe (2), at their junctions, projects, for example, 0.5 to 20 mm in the axial direction beyond the end faces of the outer pipe (1) and preferably also of the inner pipe or inner pipes (2), so that the plastic foam bodies (5) of adjacent pipe sections rest against one another over their entire surface.

2. Pipeline system according to Claim 1, characterized in that the guide pieces (4) allowing the axial displacement of the pipe sections (1, 2, 5) on the medium pipe or medium pipes (2) are designed as sliding skids (114) held non-positively or frictionally on the outer periphery of the medium pipe (3) by means of a clamping member, for example a clamping strap (111), each sliding skid (114) having, on the one hand, two supporting surfaces (118, 119) arranged at a distance from one another in the axial direction and intended for supporting it on the outer periphery of the medium pipe (3) and, on the other hand, at least one supporting surface intended for supporting it on the inner periphery of the inner pipe (2).

3. Pipeline system according to Claim 1 or 2, characterized in that, when the medium pipe (3) is continuous at the junction of adjacent outer pipes (1), the latter are surrounded on the outside or inside by a bush or sleeve (11, 13) which extends beyond the ends of adjacent outer pipes (1), with sealing rings (12), prestressed if appropriate, being interposed (Figure 7).

4. Pipeline system according to Claim 1 or 2, characterized in that, at the junction of adjacent medium-pipes (3), the ends of the adjacent outer pipes (1) and inner pipes (2) are offset in the axial direction in relation to this junction, a coaxial insulating body (14) of essentially identical design being inserted between the adjacent pipe sections so as to rest sealingly against them, and the outer pipes (1) are surrounded on the outside by a bush or sleeve (11, 13) which extend from the end of one pipe section over and beyond the insulating body (14) to the end of the other pipe section (Figure 8).

5. Pipeline system according to Claim 4, characterized in that the insulating body (14) consists of two or more segments held together by means of at least one clamping member (15), the joints between the elements preferably extending in axial planes.

6. Pipeline system according to one of Claims 1 to 5, characterized in that the axial end faces of the foam body (5) and/or of the insulating body (14) are made essentially plane in a way known per se, and projections and/or depressions are provided on these end faces for locking in position.

7. Pipeline system according to one of Claims 4 to 6, characterized in that the foam body (5') of the insulating body (14) projects, for example, 0.5 to 20 mm beyond the end faces of the latter, so that, in the course of assembly, the foam body (5') of the insulating body (14) comes to rest over its entire surface against the foam body (5) of the pipe arrangement (Figure 8).

8. Pipeline system according to one of Claims 1 to 7, characterized in that there is formed in the foam body (5) at least one channel (10) which preferably extends in a radial plane and which, starting from the periphery of an inner pipe (2), leads out to an air-relief or ventilating pipe (6, 7) (Figure 5).

9. Pipeline system according to Claim 2, characterized in that the sliding skids (114) consist of a strip extending in an axial plane and preferably bent in the form of a U, V or W, with legs which project at the ends and which form the supporting surfaces (118, 119) of the sliding skid (114) on the medium pipe (3) (Figures 14, 16, 17 and 18).

10. Pipeline system according to Claim 9, characterized in that the clamping members (111) rest against the outside of the legs forming the supporting surfaces (118, 119) against the medium pipe (3) and, if appropriate, are connected to them, for example by means of spot-welding (Figures 14, 16, 17 and 18).

11. Pipeline system according to Claim 9 or 10, characterized in that the sliding skid (114) has at least one preferably centrally or laterally arranged web (112) which extends especially in an axial plane and, on its side facing the inner pipe (2), is connected to the sliding skid (114), and which extends essentially into the region of the outer periphery of the medium pipe (3) (Figure 14).

12. Pipeline system according to Claim 11, characterized in that the web (112) is provided with grooves, notches or the like (113) on its side facing the medium pipe (3) (Figure 14).

13. Pipeline system according to one of Claims 9 to 12, characterized in that the supporting surfaces (118, 119) of the sliding skid (114) are made essentially plane (Figures 14 to 20).

14. Pipeline system according to one of Claims 9 to 13, characterized in that the radially outer supporting surface (110) of the sliding skid (114), which serves for supporting the sliding skid (114) on the inner periphery of the inner pipe (2), is curved convexly.

15. Pipeline system according to Claim 14, characterized in that the radius of curvature of the supporting surface (110) of the sliding skid (114) is less than the radius of curvature of the inner periphery of the inner pipe (2).

16. Process for producing the pipeline system according to one of Claims 1 to 15, characterized in that there is inserted, into an outer pipe preferably consisting of fibre cement or asbestos cement, at least one inner pipe which preferably likewise consists of fibre cement or asbestos cement, and the cavity between the outer pipe and inner pipe is then filled with elastic foam, especially polyurethane foam, the foam body projecting, for example, 0.5 to 20 mm beyond the ends of the outer pipe in the axial direction, whereupon the individual pipe sections formed in this way are joined together, the axial end faces of the foam bodies being pressed against one another in the axial direction, a sleeve or bush is pushed over the junction between the outer pipes, and the medium pipe is introduced into the inner pipe and mounted by means of sliding pieces.

17. Process according to Claim 16, characterized in that, at the junctions between the medium pipes, the ends of these are first connected to one another, for example by means of welding, soldering, adhesive bonding or the like, whereupon this junction has placed over it an insulating body which possesses a foam body projecting, for example, 0.5 to 20 mm beyond its end faces in the axial direction, the individual pipe sections are then pressed against one another in the axial direction, with this insulating body being interposed, and a sleeve or bush is pushed over the insulating body and extends beyond the ends of the adjacent outer pipes.

## Revendications

1. Système de conduites tubulaires, notamment multitubulaires, pour le transport d'au moins un fluide liquide et/ou gazeux ou de suspensions, par exemple par des conduites de chauffage à distance, de réfrigérant, de pétroleou de gaz naturel, comportant un tube extérieur (1) et au moins un tube intérieur (2), ainsi que d'éventuels tubes additionnels disposés dans le tube extérieur (1), par exemple des tubes d'amenée et d'évacuation d'air (6,7,8), un tube de transport (3) en métal ou en matière synthétique étant monté dans le tube intérieur de manière à pouvoir coulisser axialement, au moyen de pièces de guidage (4) maintenant une lame d'air entre le tube intérieur (2) et le tube de transport (3), et l'espace compris entre le tube extérieur (1) et le ou les tubes intérieurs (2), ainsi que les éventuels tubes additionnels (6, 7, 8), étant rempli d'une mousse synthétique constituée de préférence d'une mousse de polyuréthane, de sorte que le tube extérieur (1) et le ou les tubes (2,6,7,8) qu'il renferme sont maintenus écartés et isolés thermiquement les uns des autres au moyen de ce corps de mousse synthétique (5), caractérisé en ce que le corps de mousse synthétique (5) de chaque tronçon tubulaire constitué par un tube extérieur (1) et au moins un tube intérieur (2) est saillant axialement, dans les zones de raccordement de ces tronçons, par rapport aux extrémités du tube extérieur (1), et de préférence aussi par rapport à celles du ou des tubes intérieurs (2), cette saillie étantpar exemple comprise entre 0,5 et 20 mm., de sorte que les corps de mousse synthétiques (5) de tronçons tubulaires adjacents sont appliqués l'un contre l'autre sur toute leur section.

2. Système de conduites selon la revendication 1, caractérisé en ce queles pièces de guidage (4) permettant le coulissement axial des tronçons tubulaires (1, 2, 5) sur le ou les tubes de transport (3) sont constitués par des patins de glissement (114) maintenus par serrage et friction sur la surface extérieure du tube de transport (3) au moyen d'un organe de tension, par exemple un ruban de tension (111), chaque patin de glissement (114) comportant d'une part deux surfaces d'appui (118, 119) espacées axialement l'une de l'autre et prévues pour être appuyées sur la surface extérieure du tube de transport (3), et d'autre part au moins une surface d'appui prévue pour être appuyée sur la surface intérieure du tube intérieur (2).

3. Système de conduites selon la revendication 1 ou 2, caractérisé en ceque, dans la zone de raccordement de tubes extérieurs adjacents (1), cette zone étant traversée par le tube de transport (3), les tubes extérieurs sontentourés extérieurement ou intérieurement par un manchon ou une douille (11, 13) s'étendant (fig.7) sur les extrémités des tubes extérieurs adjacents (1), avec intercalation d'anneaux d'étanchéité (12) éventuellement précontraints.

4. Système de conduites selon la revendication 1 ou 2, caractérisé en ceque, dans la zone de raccordement de tubes de transport adjacents (3), les extrémités des tubes adjacents extérieurs (1) et intérieurs (2) sont décalées axialement par rapport à cette zone de raccordement, un corps isolant coaxial (14) agencé sensiblement comme les tronçons tubulaires étant inséréentre les tronçons tubulaires adjacents et en contact étroit avec eux, et les tubes extérieurs (1) étant entourés extérieurement par un manchon ou une douille (11, 13) s'étendant (fig.8) de l'extrémité d'un tronçon tubulaire jusqu'à l'extrémité de l'autre tronçon tubulaire par-dessus le corps isolant (14).

5. Système de conduites selon la revendication 4, caractérisé en ce que le corps isolant (14) est constitué de deux ou plusieurs segments assemblés au moyen d'un organe de tension (15), les joints séparant ces éléments étant disposés de préférence dans des plans axiaux.

6. Système de conduites selon l'une quelconque des revendications 1 à 5, caractérisé en ce que les faces frontales axiales du corps de mousse synthétique (5) et/ou du corps isolant (14) ont de manière connue une configuration sensiblement plane, et en ce qu'il est prévu sur ces faces frontales des saillies et/ou des renfoncements pour assurer le positionnement.

7. Système de conduites selon l'une quelconque des revendications 4 à 6, caractérisé en ce que le corps de mousse synthétique (5') du corps isolant (14) est saillant par rapport aux extrémités frontales de celui-ci, par exemple sur 0,5 a 20 mm., de sorte que, lors de l'assemblage, le corps de mousse synthétique (5') du corps isolant (14) vient s'appuyer sur toute sa surface (fig. 8) contre le corps de mousse synthétique (5) du tronçon tubulaire.

8. Système de conduites selon l'une quelconque des revendications 1 à 7, caractérisé en ce qu'au moins un canal (10) est ménagé dans le corps de mousse synthétique (5), de préférence dans un plan radial, ce canal conduisant(fig. 5) de la périphérie d'un tube intérieur (2) jusqu'à un tube d'amenée oud'évacuation d'air (6, 7).

9. Système de conduites selon la revendication 2, caractérisé en ce queles patins de glissement (14) sont constitués par une bande s'étendant dans un plan axial, pliée de préférence en U, en V ou en W et présentant à ses extrémités des branches écartées qui forment (fig. 14, 16, 17, 18) lessurfaces d'appui (118, 119) du patin de glissement (114) sur le tube de transport (3).

10. Système de conduites selon la revendication 9, caractérisé en ce queles organes de tension (111) sont appliqués extérieurement sur les branches formant les surfaces d'appui (118, 119) sur le tube de transport (3) et sont éventuellement liés à celles-ci (fig. 14, 16, 17, 18), par exemple par despoints de soudure.

11. Système de conduites selon la revendication 9 ou 10, caractérisé ence que le patin de glissement (114) comporte au moins une âme (112) disposée dans un plan axial, de préférence en position centrale ou latérale, et en ce que cette âme est liée au patin de glissement (114) du côté du tube intérieur (2) et s'étend (fig. 14) sensiblement jusqu'à proximité de la surface extérieure du tube de transport (3).

12. Système de conduites selon la revendication 11, caractérisé en ce que l'âme (112) comporte des rainures, des encoches ou des éléments similaires (113) du côté du tube de transport (3). (figure 14)

13. Système de conduites selon l'une quelconque des revendications 9 à 12, caractérisé en ce que les surfaces d'appui (118, 119) du patin de glissement (114) ont une forme sensiblement plane (fig. 14-20).

14. Système de conduites selon l'une quelconque des revendications 9 à 13,caractérisé en ce que la surface d'appui radiale extérieure (110) du patin de glissement (114), servant à l'appui du patin (114) contre la surface intérieure du tube intérieur (2), a une forme courbe convexe.

15. Système de conduites selon la revendication 14, caractérisé en ce que le rayon de courbure de la surface d'appui (110) du patin de glissement (114) est plus petit que le rayon de courbure de la surface intérieure du tube intérieur (2).

16. Procédé de fabrication du système de conduites selon l'une quelconque des revendications 1 à 15, caractérisé en ce qu'un tube intérieur, constitué de préférence de fibrociment ou d'amiante-ciment, est introduit dans un tube extérieur constitué de préférence également de fibrociment ou d'amiante-ciment, puis l'espace compris entre le tube extérieur et le tube intérieur est rempli d'une mousse élastique, en particulier une mousse de polyuréthane, le corps de mousse ainsi formé étant saillant axialement, par exemple de 0,5 à 20 mm., par rapport aux extrémités du tube extérieur, après quoi les tronçons tubulaires ainsi formés sont raccordés les uns aux autres,les surfaces frontales axiales du corps de mousse étant pressées les unes contre les autres en direction axiale, et une douille ou un manchon est installé sur la zone de raccordement des tubes extérieurs, et le tube de transport est introduit dans le tube intérieur en étant guidé par des pièces deglissement.

17. Procédé selon la revendication 16, caractérisé en ce que, dans leszones de raccordement des tubes de transport, tout d'abord les extrémités de ceux-ci sont raccordées mutuellement, par exemple par soudage, brasage, collage ou un procédé similaire, après quoi on installe sur cette zone de raccordement un corps isolant qui comporte un corps de mousse saillant axialement sur ses faces frontales, par exemple de 0,5 à 20 mm., et ensuite les tronçons tubulaires individuels sont pressés axialement les uns contre les autres avec intercalation de corps isolants, et une douille ou un manchon qui s'étend sur les extrémités des tubes extérieurs adjacents est installé sur le corps isolant.

Fig. 1

Fig. 2

Fig. 3

Fig. 4

Fig. 5

Fig. 6

0 093 737

Fig. 7

0 093 737

Fig. 8

0 093 737

## Fig. 9

## Fig. 10

9

Fig. 11

Fig. 12

Fig. 13

Fig. 14

Fig. 15

0 093 737

0 093 737

Fig. 16

Fig. 17

Fig. 18

Fig. 19

Fig. 20

13